# EUROPEAN PATENT SPECIFICATION

(11) **EP 4 606 919 B1**
(45) Date of publication and mention of the grant of the patent: **03.06.2026**
(21) Application number: 25152334.6
(22) Date of filing: 16.01.2025
(51) Int. Cl.: C22C 38/00, F16D 55/24

(54) **NON-DESTRUCTIVE TESTING OF CARBON BRAKE DISKS**
ZERSTÖRUNGSFREIE PRÜFUNG VON KOHLENSTOFFBREMSSCHEIBEN
ESSAI NON DESTRUCTIF DE DISQUES DE FREIN EN CARBONE

(30) Priority: 23.01.2024 US 202463623884 P
(43) Date of publication of application: 27.08.2025
(73) Proprietor: Parker-Hannifin Corporation, Cleveland, OH 44124-4141 (US)
(72) Inventor: HOWDYSHELL, Bryan W., Akron, OH 44320 (US)
(74) Representative: Murgitroyd & Company

(56) References cited:
- CN-A- 117 285 369
- US-A1- 2017 167 552
- US-B2- 8 657 971

## Description

### Field of Invention

The present disclosure relates to methods of manufacturing carbon brake disks, such as may be used for example in aircraft brake stacks or comparable applications, and in particular the present disclosure relates to a method of quality assurance testing for such brake disks.

### Background of the Invention

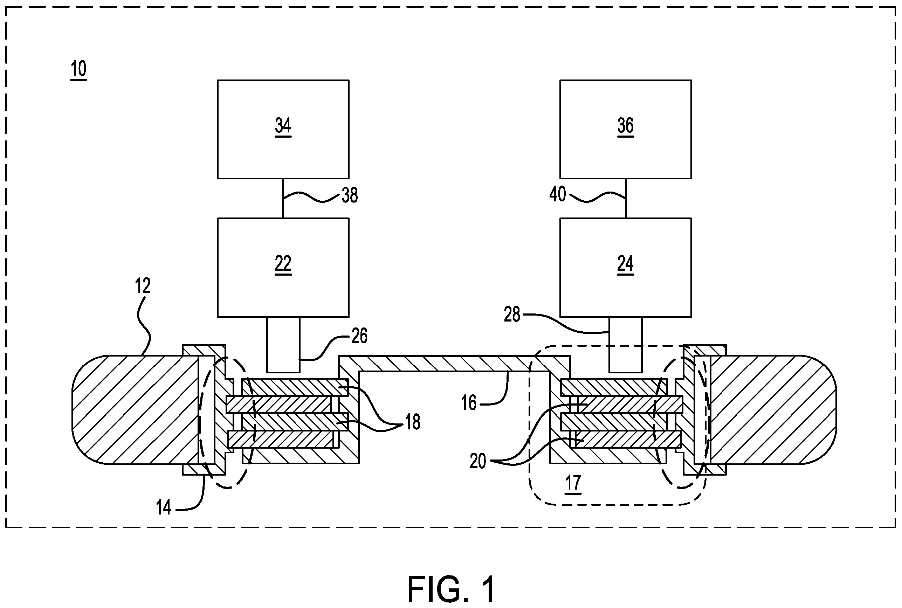

Fig. 1 is a drawing depicting an exemplary wheel brake system 10. Fig. 1 depicts a high-level diagram of the exemplary overall wheel brake system 10, which may be employed in an aircraft or comparable application. The wheel brake system 10 includes tires 12 that are each attached to a respective rotatable wheel assembly 14 for rotation of the tire. The braking system components include a stationary torque tube 16 to which there is mounted a brake stack assembly 17 associated with each rotatable wheel assembly 14. The brake stacks each includes stationary brake disks 18 and rotating brake disks 20, which typically are made of a carbon-based material. In operation, the rotating brake disks 20 align with and are keyed into the wheel assemblies to rotate with the wheels. The stationary brakes disks 18, also referred to as stators, are locked into the torque tube 16. Brake actuators 22 and 24 with respective integral output shafts 26 and 28 operate against the brake stack components to perform the braking operation by compressing the rotating brake disks against the stationary brake disks to stop rotation of the rotatable wheel assemblies 14. Electric brake systems in particular are becoming more common, especially for use in aircraft brake systems, and in an electric brake system the brake actuators 22 and 24 each includes an electronic motor for driving the actuator components. The electric brake actuators 22 and 24 are controlled by electronic controllers 34 and 36 that are interconnected to the brake actuators 22 and 24 via wiring harnesses 38 and 40.

The present disclosure is focused on ensuring high quality and reliability of the brake disk components of the brake stacks to ensure the brake disks can handle applicable loads that occur during braking. To ensure quality and reliability at the time of manufacturing, quality assurance testing of the brake disks is performed to provide confidence in load bearing capabilities of a manufactured batch lot of brake disks. Currently, quality assurance testing for carbon brake disks, including carbon aircraft brake disks, is accomplished by destructively testing a portion of finished brake disk product of a batch lot. A common method of destructive testing is a proof type test in which a lug area of the brake disk is fixtured in a tensile test machine. The disk lug area is then pulled to failure, and the resulting load is measured and reported for batch acceptance. The destructive nature of such testing is costly in that the tested brake disk can no longer be used. Typically, the factory cost value of a carbon brake disk is about $1000 each, with the sales value being substantially higher. Approximately 1-2% of carbon brake disks are destroyed for quality assurance testing, resulting in significant loss of otherwise saleable product. Document US8657971B2 discloses testing for hardening stability, temper softening and toughness of samples from brake disk material in the form of hot-rolled steel sheets.

### Summary of the Invention

There is a need in the art, therefore, for an improved method of brake disk quality assurance testing that eliminates the destructive nature of such testing and the resultant loss of saleable product. Embodiments of the present disclosure provide for numerous carbon disk designs to be non-destructively quality assurance tested, thus increasing revenue, reducing costs of testing, and improving expediency of test results. Increased quality assurance testing may be performed for more brake disks as compared to conventional quality assurance testing without significantly increasing cost, which results in improved statistical process control and reduced scrap through advanced warning and correction.

In embodiments of the present disclosure, effective quality assurance testing is achieved by replacing the conventional test, which destroys the tested finished brake disk product, with testing of a small "coupon" test sample taken from a blank brake disk source, whereby the coupon sample is acquired without causing damage to the brake disk source, which then can be finished into a saleable brake disk product. Brake disks typically are manufactured by machining using a computer numerical control (CNC) milling machine. By making minor modifications to the CNC mill machining program, small compression coupon test samples are made in a lug area of the brake disk source that is subsequently machined away for keying with the wheel assembly, and therefore not part of the finished brake disk product. The small coupon samples are easily removed from a blank brake disk source without taking the brake disk source from the milling machine, and thus not losing any brake disk part indexing or additional time.

A compression coupon sample portion is held in place on the brake disk source only by thin remaining material, and therefore the coupon sample easily can be snipped off from the brake disk source, such as with a scissors or comparable simple cutting tool. The coupon sample then can be subjected to quality assurance testing, such as being inspected, measured, and then submitted for load testing. When the CNC mill machine is combined with or proximate to a tensile test machine, the entire operation including manufacturing and quality assurance testing can be performed efficiently, providing prompt batch acceptance data for a batch lot of brake disk material being machined. The method of the present disclosure in particular has proven suitable for multiple larger diameter rotor disk designs, and similarly is feasible for larger diameter stator disk designs.

An aspect of the invention, as in claim 1, therefore, is a method of quality assurance testing for a brake disk that does not result in destruction of the brake disk. In exemplary embodiments, the method includes the steps of: forming a blank brake disk source to be processed into a finished brake disk; forming a lug area in the brake disk source for alignment of the finished brake disk; notching a portion of an outer periphery of the lug area of the brake disk source to define a sample portion within the brake disk source; removing the sample portion from the lug area of the brake disk source, wherein the brake disk source is not destroyed by formation and removal of the sample portion, the removed sample portion being a coupon sample; and strength testing the coupon sample. Removal of the sample portion is performed without removing the brake disk source from a machine, such as a CNC mill, that holds the brake disk source while the sample portion is formed. After removing the coupon sample from the brake disk source, the brake disk source is further processed as needed to form the finished brake disk.

In an exemplary embodiment of the method of quality assurance testing, the coupon sample is formed from at least a majority of the lug area of the outer periphery of the brake disk source.

In an exemplary embodiment of the method of quality assurance testing, the coupon sample is formed including a portion of the outer periphery of the brake disk source outside of the lug area.

In an exemplary embodiment of the method of quality assurance testing, removal of the sample portion is performed without removing the brake disk source from a machine that holds the brake disk source while the sample portion is formed.

In an exemplary embodiment of the method of quality assurance testing, upon removal from the brake disk source, the sample portion retains ridges that result from the notching, the method further comprising dressing off the ridges to form the coupon sample.

In an exemplary embodiment of the method of quality assurance testing, removing the sample portion from the brake disk source comprises cutting the sample portion from brake disk source with a cutting tool.

In an exemplary embodiment of the method of quality assurance testing, the cutting tool is a scissors.

In an exemplary embodiment of the method of quality assurance testing, strength testing the coupon sample comprises compression testing the coupon sample in a testing machine.

In an exemplary embodiment of the method of quality assurance testing, the method further includes, after removing the coupon sample from the brake disk source, finish processing the brake disk source to form the finished brake disk.

In an exemplary embodiment of the method of quality assurance testing, the finish processing includes removing material of the lug area from the brake disk source and forming rivet holes in the brake disk source.

In an exemplary embodiment of the method of quality assurance testing, at least the step of notching the portion of the outer periphery of the lug area of the brake disk source is performed by a CNC milling machine.

In an exemplary embodiment of the method of quality assurance testing, the steps of forming the lug area in the brake disk source and notching the portion of the outer periphery of the lug area are performed by a same machine.

In an exemplary embodiment of the method of quality assurance testing, the steps of forming the lug area in the brake disk source, notching the portion of the outer periphery of the lug area, removing material of the lug area from the brake disk source, and forming rivet holes in the brake disk source are performed by a same machine.

In an exemplary embodiment of the method of quality assurance testing, the same machine is a CNC milling machine.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the claims appended hereto. Features that are described and/or illustrated with respect to one embodiment may be used in the same way or in a similar way in one or more other embodiments and/or in combination with or instead of the features of the other embodiments.

### Brief Description of the Drawings

Fig. 1 is a drawing depicting a high-level diagram of an exemplary wheel brake system.
Fig. 2 is a drawing depicting a portion of a brake disk including formation of a compression coupon sample for quality assurance testing in accordance with embodiments of the present application.
Fig. 3 is a drawing depicting an exemplary quality assurance testing method for a brake disk in accordance with embodiments of the present application.

### Description

Embodiments of the present application will now be described with reference to the drawings, wherein like reference numerals are used to refer to like elements throughout. It will be understood that the figures are not necessarily to scale.

Reference first is made again to the overall wheel brake system 10 of Fig. 1. The rotating brake disks 20 are aligned with and keyed into the wheel assemblies 14, as indicated by the oval indicators in Fig. 1. Precise surface features must be machined into the brake disks to achieve proper alignment and keying. To perform such keying operation, lug areas are formed in a blank brake disk source. During formation of the finished brake disk from the blank brake disk source, the material in the lug areas is machined away to form alignment notches or alignment slots in the outer periphery of the finished brake disk, which are then aligned with and keyed into complementary features of the wheel assembly.

As further detailed below, in accordance with embodiments of the present application, prior to machining away all the material in a given lug area, a coupon sample is taken from the lug area material for subsequent quality assurance testing. By taking the coupon sample from lug area material that otherwise is machined away for brake disk alignment and keying, quality assurance testing is performed without having to destroy the broader brake disk or otherwise damaging the brake disk. As a result, even a brake disk that specifically is subjected to quality assurance testing can be used as a finished brake disk product.

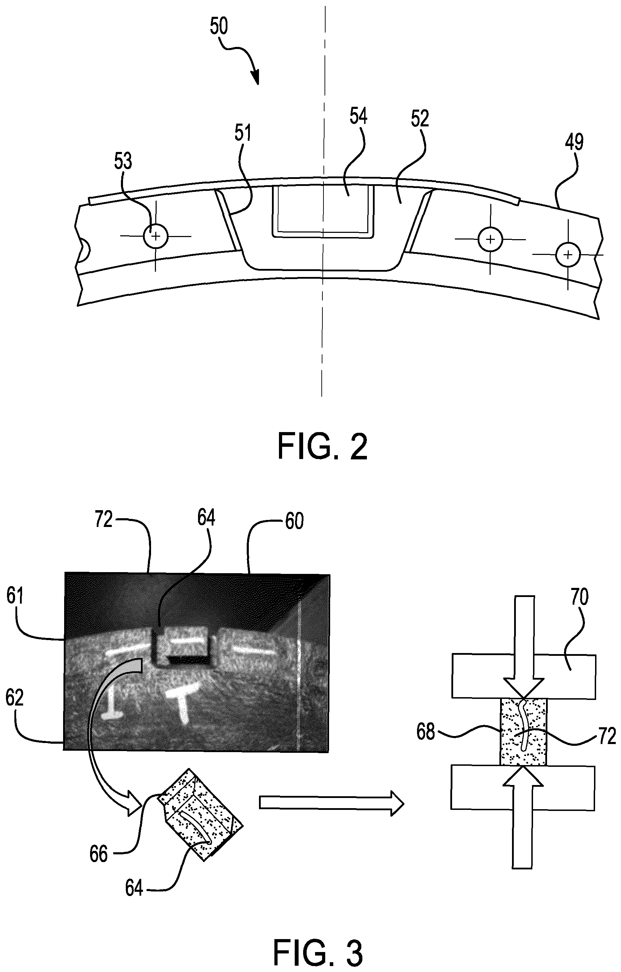

Fig. 2 is a drawing depicting a portion of a brake disk including formation of a compression test coupon sample in accordance with embodiments of the present application. As referenced above, effective quality assurance testing is achieved by replacing the conventional strength test, which destroys the tested finished brake disk product, with testing of a small "coupon" test sample taken from a blank brake disk source, whereby the coupon sample is acquired without causing damage to the brake disk source, which then can be finished into a saleable brake disk product. Fig. 2 depicts a portion of a brake disk source 50, which may be a carbon brake disk source. The processes of the present application generally are more directed toward the rotating brake disks that are keyed into the wheel assemblies, although comparable principles may be applied to forming the stationary brake disks for interaction with the torque tube. The following description principally pertains to formation of a rotating brake disk as a non-limiting example.

During manufacture, a lug area 52 is formed by notching out a portion adjacent to an outer edge or periphery 49 of the brake disk source 50. In particular, the lug area 52 is defined by keying notches or slots 51 which define the lug area 52 that subsequently will be machine away to create the notches that are used for alignment with a wheel assembly. During manufacture, rivet holes 53 also may be formed in the brake disk source 50. In typical brake disk formation, U-shaped channels (not shown) are applied over a portion of the face of the brake disk source 50 along the outer periphery 49. The U-shaped channels typically are formed as metal plates that lie over the carbon material of the brake disk source, such that the U-shaped channels act as reinforcing impact areas for interacting with the wheel keys during braking. Rivets (also not shown) extend through the U-shaped channels and through the rivet holes 53 to fasten the U-shaped channels to the carbon brake disk source 50.

A compression coupon sample 54 is formed in the lug area 52 of the brake disk source 50 between the keying notches 51. By forming a coupon sample in an area of the brake disk source where the keying notches already are being formed, a machining program readily can be adapted to form the compression coupon sample 54 in addition to the keying notches 51.

In conventional manufacturing processes, a blank brake disk source is formed using a lathe. The blank brake disk source is then transferred to a CNC mill machine, which as programmed forms the lug area, alignment notches, and rivet holes. As referenced above, material within the lug area is machined away for alignment with and keying into the wheel assembly. By making minor modifications to the CNC mill machining program, small compression test coupon samples are made in the lug area of the brake disk source that subsequently is to be machined away, and therefore not part of the finished brake disk product. By taking the coupon sample from lug area material that otherwise is machined away for brake disk alignment and keying, quality assurance testing can be performed on the coupon sample without having to destroy the broader brake disk or otherwise damaging the brake disk. As a result, even a brake disk that specifically is subjected to quality assurance testing can be used as a finished brake disk product. The small coupon samples are easily removed from a blank brake disk source without taking the brake disk source from the milling machine, and thus without losing any brake disk part indexing or additional time.

Fig. 3 is a drawing depicting an exemplary quality assurance testing method for a brake disk, including a process of formation of the coupon sample and subsequent testing process. The CNC mill program is altered to produce the compression coupon sample, which then is removed from the lug area of the brake disk source prior to machining away the remainder of the lug area material. The compression coupon sample may be removed from the lug area in the desired alignment orientation of the brake disk and in the same direction that the brake disk is loaded in service. In an exemplary embodiment, the compression coupon sample is formed from at least a majority of an outer periphery of the brake disk source between the keying slots that define the lug areas. In an exemplary embodiment, the compression coupon sample is formed to include a portion the outer periphery of the brake disk source outside of the lug area.

Referring to Fig. 3, the CNC mill machines the coupon sample by imparting coupon notches 60 at a portion of the outer periphery 61 of a lug area of the brake disk source 62. The coupon notches 60 define a sample portion 64 within the lug area of the brake disk source 62 that ultimately will constitute the coupon sample. In this manner, the sample portion is held in place on the brake disk source only by thin remaining material, and therefore the coupon sample easily can be removed from the brake disk source. In particular, the sample portion 64 may be snipped off from the brake disk source 62 by any suitable cutting process, such as with a scissors or comparable simple cutting tool. The removal of the sample portion 64 may be performed without removing the brake disk source 62 from the machine (such as the CNC mill) that holds the brake disk source while the sample portion is formed, and the brake disk source 62 may be further processed by additional machining steps into a final brake disk.

As further shown in Fig. 3, upon removal from the lug area of the brake disk source 62, the sample portion 64 retains ridges 66 that result from the notching process that forms the sample portion 64. The ridges 66 are dressed off or buffered off by filing or other comparable process to form a finished compression coupon sample 68, and the coupon sample 68 can be inspected and measured for suitability for testing. The coupon sample 68 may then be subjected to a compression test or other suitable strength test by a testing machine 70. As seen in the upper portion of Fig. 3, orientation lines 72 are provided to illustrate the alignment of the sample portion 64 within the brake disk source 62 prior to removal. One of the alignment lines 72 further illustrates the proper orientation of the finished compression coupon sample 68 within the testing machine 70. By removing the sample portion 64 without removing the brake disk source 62 to form the compression coupon sample 68, the subsequent compression testing or other strength testing does not result in destruction of the brake disk in contrast to conventional testing procedures. In addition, the small coupon samples are easily removed from the brake disk source without taking the brake disk from the milling machine, thus not losing any brake disk part indexing or additional time.

As referenced above, a blank brake disk source typically is formed using a lathe. In one exemplary embodiment, a largely blank brake disk source is quality assurance tested prior to machining into a finished brake disk product. A blank brake disk source essentially comes off the lathe as a featureless donut disk. A CNC mill machine then may be employed to form the coupon sample as described above, and the coupon sample is quality tested at the donut stage. This process is repeated on numerous blank disk sources to manufacture a batch of quality-tested brake disk sources. When needed at a subsequent time, these quality-tested brake disk sources can be inserted again into a CNC mill machine to perform the additional finishing steps, such as removing the remaining material from the lug area, forming the rivet holes, and other finishing steps that may be required for a given application. By testing blank brake disk sources at the donut stage, quality assurance is verified early in the manufacturing process, although the quality assurance machining and the finishing machining are divided into separate machining programs and operations.

Alternatively, the donut blank disk sources may be completely machined into finished brake disk products within a single process. In such process, the coupon samples are formed as described above, which is followed in a single machining program by the additional finishing steps, such as removing the remaining material from the lug area, forming the rivet holes, and other finishing steps that may be required for a given application. By removing the coupon sample for testing the brake disk source as part of a single program that results in a finished brake disk product, quality assurance is verified later in the manufacturing process, but the quality assurance machining and finishing machining are combined more efficiently into a single machining program and operation. When the CNC mill machine is combined with or proximate to a strength testing machine, the entire operation including manufacturing and quality assurance testing can be performed efficiently, providing prompt batch acceptance data for a batch lot of brake disk material being machined.

Preliminary studies have shown the above processes to be particularly suitable to work for multiple larger diameter rotor disks, and also is feasible for large diameter stator disk designs. With relatively larger diameter brake disks, the outer diameter of the brake disk may be large enough and/or the coupon sample may be small enough such that the size of the coupon sample relative to the brake disk is negligible. The methods of the present disclosure provide for numerous carbon disk designs to be non-destructively quality assurance tested, thus increasing revenue, reducing costs of testing, and improving expediency of test results. Increased quality assurance testing may be performed for more brake disks as compared to conventional quality assurance testing without significantly increasing cost, which results in improved statistical process control and reduced scrap through advanced warning and correction.

## Claims

1. A method of quality assurance testing for a brake disk comprising the steps of:
forming a blank brake disk source (50; 62) to be processed into a finished brake disk;
forming a lug area (52) in the brake disk source (50; 62) for alignment of the finished brake disk;
notching a portion of an outer periphery (49; 61) of the lug area (52) of the brake disk source (50; 62) to define a sample portion (64) within the brake disk source (50; 62);
removing the sample portion (64) from the lug area (52) of the brake disk source (50; 62), wherein the brake disk source (50; 62) is not destroyed by formation and removal of the sample portion (64), the removed sample portion being a coupon sample (54; 68); and
strength testing the coupon sample (54; 68).

2. The method of quality assurance testing for a brake disk of claim 1, wherein the coupon sample (54; 68) is formed from at least a majority of the lug area (52) of the outer periphery (49; 61) of the brake disk source (50; 62).

3. The method of quality assurance testing for a brake disk of any of claims 1-2, wherein the coupon sample (54; 68) is formed including a portion of the outer periphery (49; 61) of the brake disk source outside of the lug area (52).

4. The method of quality assurance testing for a brake disk of any of claims 1-3, wherein removal of the sample portion (64) is performed without removing the brake disk source (50; 62) from a machine that holds the brake disk source (50; 62) while the sample portion (64) is formed.

5. The method of quality assurance testing for a brake disk of any of claims 1-4, wherein upon removal from the brake disk source (50; 62), the sample portion (64) retains ridges (66) that result from the notching, the method further comprising dressing off the ridges (66) to form the coupon sample (68).

6. The method of quality assurance testing for a brake disk of any of claims 1-5, wherein removing the sample portion (64) from the brake disk source (50; 62) comprises cutting the sample portion (64) from brake disk source (50; 62) with a cutting tool.

7. The method of quality assurance testing for a brake disk of claim 6, wherein the cutting tool is scissors.

8. The method of quality assurance testing for a brake disk of any of claims 1-7, wherein strength testing the coupon sample (68) comprises compression testing the coupon sample (68) in a testing machine (70).

9. The method of quality assurance testing for a brake disk of any of claims 1-8, further comprising, after removing the coupon sample (68) from the brake disk source (50; 62), finish processing the brake disk source to form the finished brake disk.

10. The method of quality assurance testing for a brake disk of claim 9, wherein the finish processing includes removing material of the lug area (52) from the brake disk source (50; 62) and forming rivet holes (53) in the brake disk source (50; 62).

11. The method of quality assurance testing for a brake disk of any of claims 1-10, wherein at least the step of notching the portion of the outer periphery (49; 61) of the lug area (52) of the brake disk source is performed by a CNC milling machine.

12. The method of quality assurance testing for a brake disk of any of claims 1-10, wherein the steps of forming the lug area (52) in the brake disk source and notching the portion of the outer periphery (49; 61) of the lug area (52) are performed by a same machine.

13. The method of quality assurance testing for a brake disk of claim 10, wherein the steps of forming the lug area (52) in the brake disk source, notching the portion of the outer periphery (49; 61) of the lug area, removing material of the lug area (52) from the brake disk source, and forming rivet holes (53) in the brake disk source are performed by a same machine.

14. The method of quality assurance testing for a brake disk of claim 13, wherein the same machine is a CNC milling machine.

## Patentansprüche

1. Ein Verfahren zur Qualitätssicherungsprüfung für eine Bremsscheibe, das die folgenden Schritte beinhaltet:
Bilden einer Rohling-Bremsscheibenquelle (50; 62), die zu einer fertigen Bremsscheibe zu verarbeiten ist;
Bilden eines Ansatzbereichs (52) in der Bremsscheibenquelle (50; 62) zur Ausrichtung der fertigen Bremsscheibe;
Einkerben eines Abschnitts eines Außenrands (49; 61) des Ansatzbereichs (52) der Bremsscheibenquelle (50; 62), um einen Probenabschnitt (64) innerhalb der Bremsscheibenquelle (50; 62) zu definieren;
Entfernen des Probenabschnitts (64) aus dem Ansatzbereich (52) der Bremsscheibenquelle (50; 62), wobei die Bremsscheibenquelle (50; 62) durch Bildung und Entfernung des Probenabschnitts (64) nicht zerstört wird, wobei der entfernte Probenabschnitt eine Couponprobe (54; 68) ist; und
Festigkeitsprüfung der Couponprobe (54; 68).

2. Verfahren zur Qualitätssicherungsprüfung für eine Bremsscheibe gemäß Anspruch 1, wobei die Couponprobe (54; 68) aus mindestens einem Großteil des Ansatzbereichs (52) des Außenrands (49; 61) der Bremsscheibenquelle (50; 62) gebildet wird.

3. Verfahren zur Qualitätssicherungsprüfung für eine Bremsscheibe gemäß einem der Ansprüche 1-2, wobei die Couponprobe (54; 68) einschließlich eines Abschnitts des Außenrands (49; 61) der Bremsscheibenquelle außerhalb des Ansatzbereichs (52) gebildet wird.

4. Verfahren zur Qualitätssicherungsprüfung für eine Bremsscheibe gemäß einem der Ansprüche 1-3, wobei die Entfernung des Probenabschnitts (64) durchgeführt wird, ohne die Bremsscheibenquelle (50; 62) aus einer Maschine zu entfernen, die die Bremsscheibenquelle (50; 62) hält, während der Probenabschnitt (64) gebildet wird.

5. Verfahren zur Qualitätssicherungsprüfung für eine Bremsscheibe gemäß einem der Ansprüche 1-4, wobei der Probenabschnitt (64) bei Entfernung von der Bremsscheibenquelle (50; 62) Wulste (66) zurückbehält, die aus dem Einkerben resultieren, wobei das Verfahren ferner das Abglätten der Wulste (66) beinhaltet, um die Couponprobe (68) zu bilden.

6. Verfahren zur Qualitätssicherungsprüfung für eine Bremsscheibe gemäß einem der Ansprüche 1-5, wobei das Entfernen des Probenabschnitts (64) von der Bremsscheibenquelle (50; 62) das Schneiden des Probenabschnitts (64) von der Bremsscheibenquelle (50; 62) mit einem Schneidwerkzeug beinhaltet.

7. Verfahren zur Qualitätssicherungsprüfung für eine Bremsscheibe gemäß Anspruch 6, wobei das Schneidwerkzeug eine Schere ist.

8. Verfahren zur Qualitätssicherungsprüfung für eine Bremsscheibe gemäß einem der Ansprüche 1-7, wobei die Festigkeitsprüfung der Couponprobe (68) die Kompressionsprüfung der Couponprobe (68) in einer Prüfmaschine (70) beinhaltet.

9. Verfahren zur Qualitätssicherungsprüfung für eine Bremsscheibe gemäß einem der Ansprüche 1-8, das ferner, nach dem Entfernen der Couponprobe (68) von der Bremsscheibenquelle (50; 62), das Endbearbeiten der Bremsscheibenquelle zum Bilden der fertigen Bremsscheibe beinhaltet.

10. Verfahren zur Qualitätssicherungsprüfung für eine Bremsscheibe gemäß Anspruch 9, wobei das Endbearbeiten das Entfernen von Material des Ansatzbereichs (52) von der Bremsscheibenquelle (50; 62) und das Bilden von Nietlöchern (53) in der Bremsscheibenquelle (50; 62) umfasst.

11. Verfahren zur Qualitätssicherungsprüfung für eine Bremsscheibe gemäß einem der Ansprüche 1-10, wobei mindestens der Schritt des Einkerbens des Abschnitts des Außenrands (49; 61) des Ansatzbereichs (52) der Bremsscheibenquelle durch eine CNC-Fräsmaschine durchgeführt wird.

12. Verfahren zur Qualitätssicherungsprüfung für eine Bremsscheibe gemäß einem der Ansprüche 1-10, wobei die Schritte des Bildens des Ansatzbereichs (52) in der Bremsscheibenquelle und des Einkerbens des Abschnitts des Außenrands (49; 61) des Ansatzbereichs (52) durch dieselbe Maschine durchgeführt werden.

13. Verfahren zur Qualitätssicherungsprüfung für eine Bremsscheibe gemäß Anspruch 10, wobei die Schritte des Bildens des Ansatzbereichs (52) in der Bremsscheibenquelle, des Einkerbens des Abschnitts des Außenrands (49; 61) des Ansatzbereichs, des Entfernens von Material des Ansatzbereichs (52) von der Bremsscheibenquelle und des Bildens von Nietlöchern (53) in der Bremsscheibenquelle durch dieselbe Maschine durchgeführt werden.

14. Verfahren zur Qualitätssicherungsprüfung für eine Bremsscheibe gemäß Anspruch 13, wobei diese selbe Maschine eine CNC-Fräsmaschine ist.

## Revendications

1. Un procédé de test d'assurance de la qualité pour un disque de frein comprenant les étapes consistant à :
former une source de disque de frein brute (50 ; 62) à traiter en un disque de frein fini ;
former une zone formant oreille (52) dans la source de disque de frein (50 ; 62) pour l'alignement du disque de frein fini ;
entailler une portion d'une périphérie externe (49 ; 61) de la zone formant oreille (52) de la source de disque de frein (50 ; 62) pour définir une portion formant échantillon (64) à l'intérieur de la source de disque de frein (50 ; 62) ;
retirer la portion formant échantillon (64) de la zone formant oreille (52) de la source de disque de frein (50 ; 62), dans lequel la source de disque de frein (50 ; 62) n'est pas détruite par la formation et le retrait de la portion formant échantillon (64), la portion formant échantillon retirée étant un échantillon formant coupon (54 ; 68) ; et
tester la résistance de l'échantillon formant coupon (54 ; 68).

2. Le procédé de test d'assurance de la qualité pour un disque de frein de la revendication 1, dans lequel l'échantillon formant coupon (54 ; 68) est formé à partir d'au moins une majeure partie de la zone formant oreille (52) de la périphérie externe (49 ; 61) de la source de disque de frein (50 ; 62).

3. Le procédé de test d'assurance de la qualité pour un disque de frein de n'importe lesquelles des revendications 1 à 2, dans lequel l'échantillon formant coupon (54 ; 68) est formé en incluant une portion de la périphérie externe (49 ; 61) de la source de disque de frein à l'extérieur de la zone formant oreille (52).

4. Le procédé de test d'assurance de la qualité pour un disque de frein de n'importe lesquelles des revendications 1 à 3, dans lequel le retrait de la portion formant échantillon (64) est effectué sans retirer la source de disque de frein (50 ; 62) d'une machine qui maintient la source de disque de frein (50 ; 62) pendant que la portion formant échantillon (64) est formée.

5. Le procédé de test d'assurance de la qualité pour un disque de frein de n'importe lesquelles des revendications 1 à 4, dans lequel dès le retrait de la source de disque de frein (50 ; 62), la portion formant échantillon (64) garde des crêtes (66) qui résultent de l'entaillage, le procédé comprenant en outre l'ébarbage des crêtes (66) pour former l'échantillon formant coupon (68).

6. Le procédé de test d'assurance de la qualité pour un disque de frein de n'importe lesquelles des revendications 1 à 5, dans lequel le fait de retirer la portion formant échantillon (64) de la source de disque de frein (50 ; 62) comprend le fait de couper la portion formant échantillon (64) de la source de disque de frein (50 ; 62) avec un outil de coupe.

7. Le procédé de test d'assurance de la qualité pour un disque de frein de la revendication 6, dans lequel l'outil de coupe est des ciseaux.

8. Le procédé de test d'assurance de la qualité pour un disque de frein de n'importe lesquelles des revendications 1 à 7, dans lequel le fait de tester la résistance de l'échantillon formant coupon (68) comprend le fait de tester par compression l'échantillon formant coupon (68) dans une machine de test (70).

9. Le procédé de test d'assurance de la qualité pour un disque de frein de n'importe lesquelles des revendications 1 à 8, comprenant en outre, après le fait de retirer l'échantillon formant coupon (68) de la source de disque de frein (50 ; 62), le fait d'opérer un traitement de finition sur la source de disque de frein pour former le disque de frein fini.

10. Le procédé de test d'assurance de la qualité pour un disque de frein de la revendication 9, dans lequel le fait d'opérer un traitement de finition inclut le fait de retirer de la matière de la zone formant oreille (52) de la source de disque de frein (50 ; 62) et de former des trous de rivet (53) dans la source de disque de frein (50 ; 62).

11. Le procédé de test d'assurance de la qualité pour un disque de frein de n'importe lesquelles des revendications 1 à 10, dans lequel au moins l'étape consistant à entailler la portion de la périphérie externe (49 ; 61) de la zone formant oreille (52) de la source de disque de frein est effectuée par une machine de fraisage CNC.

12. Le procédé de test d'assurance de la qualité pour un disque de frein de n'importe lesquelles des revendications 1 à 10, dans lequel les étapes consistant à former la zone formant oreille (52) dans la source de disque de frein et à entailler la portion de la périphérie externe (49 ; 61) de la zone formant oreille (52) sont effectuées par une même machine.

13. Le procédé de test d'assurance de la qualité pour un disque de frein de la revendication 10, dans lequel les étapes consistant à former la zone formant oreille (52) dans la source de disque de frein, à entailler la portion de la périphérie externe (49 ; 61) de la zone formant oreille, à retirer de la matière de la zone formant oreille (52) de la source de disque de frein, et à former des trous de rivet (53) dans la source de disque de frein sont effectuées par une même machine.

14. Le procédé de test d'assurance de la qualité pour un disque de frein de la revendication 13, dans lequel la même machine est une machine de fraisage CNC.
